# EUROPEAN PATENT SPECIFICATION

(11) **EP 0 581 370 B1**
(45) Date of publication and mention of the grant of the patent: **15.10.1997**
(21) Application number: 93202144.7
(22) Date of filing: 22.07.1993
(51) Int. Cl.: H04N 9/64, H04N 9/79

(54) **Television signal receiver**
Fernsehsignalempfänger
Récepteur de signaux de télévision

(30) Priority: 29.07.1992 EP 92202341
(43) Date of publication of application: 02.02.1994
(73) Proprietor: Philips Electronics N.V., 5621 BA Eindhoven (NL)
(72) Inventor: Talens, Hendrinus, c/o INT. OCTROOIBUREAU B.V., NL-5656 AA Eindhoven (NL)
(74) Representative: Steenbeek, Leonardus Johannes

(56) References cited:
- EP-A- 0 309 891
- WO-A-91/00675

## Description

The invention relates to a receiver for television signals which may receive composite video (CVBS) signals at a single input connector pin in a first mode, or separate luminance (Y) and chrominance (C) signals at two input connector pins in a second mode, from, for example, a SCART connection, while the same input connector pin is used to receive the composite video signal or the luminance signal.

German Patent Application DE-A-37.33.475 (Patent Family member of EP-A-0 309 891) discloses a receiver of the above-mentioned type. The input connector pin which may convey either the CVBS signal or the luminance signal is examined as to whether it conveys a color burst signal. If such a color burst signal is indeed present, it is concluded that a CVBS signal is applied to the examined input connector pin. While theoretically, such a construction may give the right decision in a simple manner, problems appear to occur when a color burst is erroneously deemed to be detected at an input connector pin for conveying luminance only as a consequence of cross-talk from the chrominance wire to the luminance wire of the SCART connection, or caused by spikes and/or noise.

WO-A-91/00675 discloses a television set for selectively processing a composite video baseband signal (CVBS) or a signal split into a composite video signal and a chrominance carrier. A composite video baseband signal (CVBS) can be fed to the SCART-socket of a television set or the composite video signal and the modulated chrominance carrier can be fed to two inputs, as desired. The chrominance carrier may, for example, be in S-VHS. The aim is to obtain automatic detection and switching between these two possibilities. Adaptation to the different signals is effected by a test process initiated by means of a logical evaluation of unambiguously recognizable criteria at the two inputs.

It is, *inter alia,* an object of the invention to provide a receiver for television signals in which a very reliable detection of the type of input signal is carried out. To this end, a first aspect of the invention provides a receiver for television signals as defined in the main claim. Advantageous embodiments are defined in the subclaims.

The invention is based on the recognition that a simple comparison of the color burst levels at both inputs will indicate the input at which the chrominance signal is present, because any erroneous color burst signal caused by cross-talk will have a far smaller level than the real color burst signal. In an advantageous embodiment, the gain control signal in the automatic gain control circuit of the color decoder is used to measure the color burst level: the smallest gain control signal corresponds to the strongest color burst signal. This embodiment has the advantage that only very few additional elements are needed for the comparison, as the automatic gain control circuit already present in the television signal receiver can be used.

These and other aspects of the invention will be apparent from and elucidated with reference to the embodiments described hereinafter.

In the drawing:

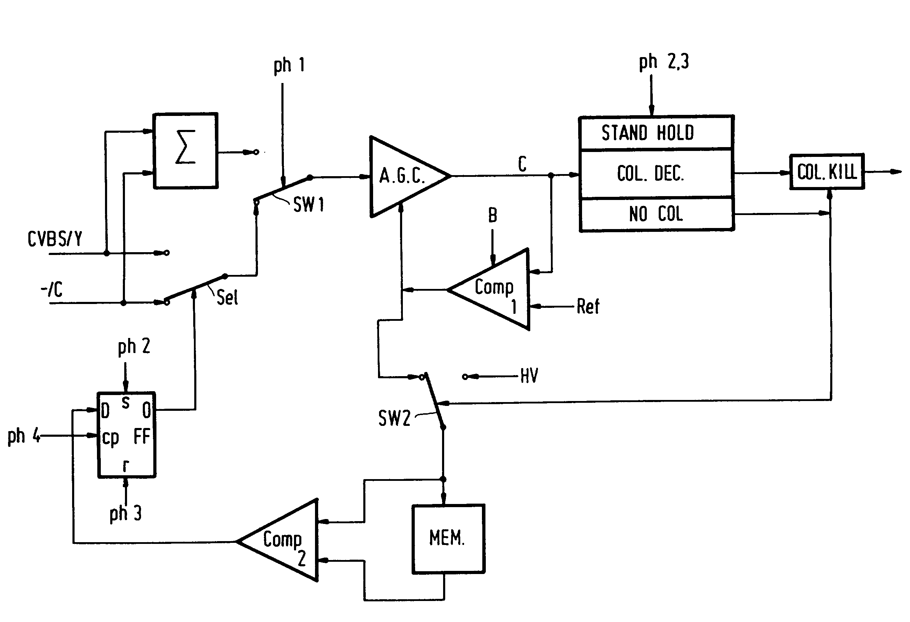

Fig. 1 shows an embodiment of a television signal receiver in accordance with the present invention.

In Fig. 1, a first input CVBS/Y for either the composite video signal CVBS or the luminance signal Y is connected to a first switching contact of a selector Sel, while a second input C for the chrominance signal C is connected to a second input of the selector Sel. The selector Sel connects either the first input or the second input to an automatic gain control amplifier AGC through a switch Sw1 which will be discussed below. The amplifier AGC only amplifies signals having a frequency around the color subcarrier frequency. An output of the amplifier AGC is connected to a first input of a comparator COMP1, whose other input receives a reference level signal REF. During the color burst period B, the comparator COMP1 calculates a gain control signal which is applied to a control input of the amplifier AGC. The amplifier AGC and the comparator COMP1 thus constitute an automatic gain control circuit for the chrominance signals. It will be evident that a large gain control signal corresponds to a weak color burst signal, while a small gain control signal corresponds to a strong color burst signal. A comparison of the gain control signal during two successive measuring periods of a predetermined duration, in which the selector Sel alternately selects one or the other of the two inputs, will show which input carries the strongest, i.e. the true chrominance signal. Such measuring periods may have the duration of one television field; however, measuring periods corresponding to several line periods are also possible. The required duration of the measuring periods depends on the settling time of the automatic gain control circuit AGC, COMP1.

To compare the gain control signal during the two successive periods, the gain control signal from the comparator COMP1 is applied to a memory MEM through a switch Sw2 which will be discussed below. The memory MEM delays the gain control signal for one measuring period. The current and delayed gain control signals are applied to a comparator COMP2 for selecting the weakest gain control signal which indicates the input at which the strongest color burst signal is present, i.e. at which input the chrominance signal is received. The output of the comparator COMP2 is coupled to a control input of the selector Sel through a flip-flop circuit FF. In order to set the selector Sel in the right positions during the respective measuring periods in which the inputs CVBS/Y and C of the television signal receiver are tested, the flip-flop circuit FF is set during the measuring period ph2 in which the CVBS/Y input is tested, while the flip-flop circuit is reset during the measuring period ph3 in which the C input is tested. After both measuring periods ph2 and ph3, the flip-flop circuit FF receives a pulse ph4 at its clock-pulse input to copy the decision made by the comparator COMP2 to the selector Sel. The selector Sel maintains the position determined by the comparator COMP2 until, for example, the NO COL signal indicates that the chrominance signal is no longer reliable; this may occur after the television signal receiver has been tuned to a new channel.

The television transmission standard is preferably recognized from the sum of the input signals at the first and second inputs of the television signal receiver, because then the standard recognition procedure has to be executed only once. To ensure that the above-described chrominance conveying input selection procedure is only performed when reliable chrominance signals are available, the standard recognition procedure is preferably executed in a preliminary operation phase ph1 preceding the measuring periods ph2 and ph3 during which measuring periods it is determined which input conveys the chrominance signals. To this end, the input signals of the television signal receiver are added in an adder Σ whose output is connected to the automatic gain control circuit AGC, COMP1 through another switching contact of the switch Sw1 during the preliminary operation phase ph1. The output of the automatic gain control circuit AGC, COMP1 is coupled to a color decoder COL DEC. The color decoder COL DEC includes standard recognition circuitry and a section which furnishes a no-color signal NO COL when no recognizable color signal is present. The color decoder COL DEC includes a section STAND HOLD which holds, during the measuring periods ph2 and ph3, the decision about the television transmission standard recognized in the preliminary operation phase ph1. The use of the sum of the input signals at the first and second inputs results in a more reliable standard recognition, as the standard recognition circuitry is not disturbed by error signals present at an input which does not convey a chrominance signal. It should be noted that even in a television signal receiver which is only suitable for one television transmission standard, standard recognition circuitry is present to determine whether a received signal complies with the standard concerned.

The output of the color decoder COL DEC is connected to a color killer circuit COL KILL which is controlled by the signal NO COL. If no standard is recognized during the preliminary standard recognition operation phase ph1 the television signal receiver will immediately switch to a black/white reception mode. The signal NO COL further controls the switch SW2 in such a way that a high voltage HV is applied to the memory MEM and the comparator COMP2 when no recognizable color signal is present during the measuring periods ph2 and ph3. This high voltage HV functions as a fake high automatic gain control signal which ensures that the currently selected input will not be deemed to convey the chrominance signals if no recognizable chrominance signal is present. This results in an even more reliable decision as to which input conveys the chrominance signals, because a relatively low automatic gain control signal furnished by the comparator COMP1 which is based on error signals like noise and/or spikes which do not relate to a television transmission standard does not cause a selection of the input conveying such error signals.

It will be evident that the input carrying the strongest burst signal may be selected in another way, for example, by means of a gate circuit which passes the input signals during the burst signal periods, followed by a comparator which selects the input whose burst signal has the highest level. In other words, a sequential determination of that input which conveys the chrominance signals is not essential for the invention because the determination may be performed in parallel as well. The measuring period ph3 may precede the measuring period ph2. However, the serial determination described hereinbefore, in which the comparison is carried out at the output of the selector Sel, has the advantage that the automatic gain control circuit already present in the television signal receiver can be used for the determination, so that a saving of circuit elements is achieved.

The television signal receiver may have a third mode in which RGB signals are received. In this mode, a red (R) signal is applied to the C input, while sync signals or complete CVBS signals are applied to the CVBS/Y input. The third mode is recognized by a special signal (referred to as fast blanking signal) applied to a further input of the television signal receiver. In the third mode, the television signal receiver described above will select the CVBS/Y input as the red signal contains no components at the color subcarrier frequency. The special signal is used by other elements of the television signal receiver (not shown in Fig. 1) to select the RGB signals instead of the output of the color decoder COL DEC.

## Claims

1. A receiver for television signals having first and second inputs for receiving luminance signals at the first input and chrominance signals at the second input in a first mode, or composite video signals at the first input in a second mode, the receiver comprising:
selector means for selecting said first or said second input; and
characterized by:
comparison means for comparing a color burst level present at said first input and a color burst level present at said second input, to control said selector means in such a way that the input carrying the highest color burst level is selected.

2. A receiver as claimed in claim 1, wherein said comparison means are coupled to an output of said selector means.

3. A receiver as claimed in claim 1, wherein said comparison means include an automatic chrominance gain control circuit having a gain control output furnishing signals indicative of said color burst levels at said first and said second inputs, respectively.

4. A receiver as claimed in claim 1, wherein said comparison means include a memory receiving signals indicative of said color burst levels at said first and second inputs, and a comparator coupled to an input and an output of said memory for comparing said indicative signals corresponding to the color burst levels present at said first and second inputs, respectively, an output of said comparator being coupled to control said selector means.

5. A receiver as claimed in claim 1, further comprising adder means coupled to said first and second inputs, and means coupled to said adder means for recognizing a television transmission standard on the basis of the sum of the signals at said first and second inputs.

6. A receiver as claimed in claim 1, further comprising television transmission standard recognizing means for furnishing a signal indicating the absence of recognizable color signals to preclude the selection of an input which does not convey recognizable color signals.

## Patentansprüche

1. Empfänger für Fernsehsignale mit einem ersten und einem zweiten Eingang zum Empfangen von Leuchtdichtesignalen an dem ersten Eingang und von Farbartsignalen an dem zweiten Eingang in einer ersten Betriebsart, oder von Videosignalgemischen an einem ersten Eingang in einer zweiten Betriebsart, wobei der Empfänger die nachfolgenden Elemente aufweist:
- Selektormittel zum Selektieren des genannten ersten oder zweiten Eingangs, und
gekennzeichnet durch
- Vergleichsmittel zum Vergleichen eines an dem genannten ersten Eingang vorhandenen Farbsynchronsignalpegels und eines an dem genannten zweiten Eingang vorhandenen Farbsynchronsignalpegels zum Steuern der genannten Selektormittel derart, daß der Eingang mit dem höheren Farbsynchronsignalpegel selektiert wird.

2. Empfänger nach Anspruch 1, wobei die genannten Vergleichsmittel mit einem Ausgang der genannten Selektormittel gekoppelt sind.

3. Empfänger nach Anspruch 1, wobei die genannten Vergleichsmittel eine automatische Farbartverstärkungsregelschaltung haben mit einem Verstärkungsregelausgang, der Signale liefert, die indikativ sind für die genannten Farbsynchronpegel an dem ersten bzw. zweiten Eingang.

4. Empfänger nach Anspruch 1, wobei die genannten Vergleichsmittel einen Speicher enthalten, der Signale empfängt, die indikativ sind für die genannten Farbsynchronpegel an dem genannten ersten und zweiten Eingang, und eine mit einem Eingang und einem Ausgang des genannten Speichers gekoppelte Vergleichsschaltung zum Vergleichen der genannten indikativen Signale, die den Farbsynchronpegeln an dem genannten esrten bzw. zweiten Eingang entsprechen, wobei ein Ausgangssignal der genannten Vergleichsschaltung die genannten Selektormittel steuert.

5. Empfänger nach Anspruch 1, weiterhin mit Addiermitteln, die mit dem ersten und zweiten Eingang gekoppelt sind und Mitteln, die mit den genannten Addiermitteln gekoppelt sind zum Wiedererkennen einer Fernsehübertragungsnorm auf Basis der Summe der Signale an dem genannten ersten und zweiten Eingang.

6. Empfänger nach Anspruch 1, weiterhin mit Fernsehübertragungsnormwiedererkennungsmitteln zum Liefern eines Signal, welches das Fehlen wiedererkennbarer Farbsignale angibt zur Vermeidung der Selektion eines Eingangs, der keine wiedererkennbaren Farbsignale führt.

## Revendications

1. Récepteur de signaux de télévision ayant une première entrée et une deuxième entrée pour recevoir des signaux de luminance à la première entrée et des signaux de chrominance à la deuxième entrée dans un premier mode, ou des signaux vidéo composites à la première entrée dans un deuxième mode, le récepteur comprenant :
des moyens de sélection pour sélectionner ladite première ou ladite deuxième entrée; et caractérisé par :
des moyens de comparaison pour comparer un niveau de salve couleur présent à ladite première entrée et un niveau de salve couleur présent à ladite deuxième entrée, pour commander lesdits moyens de sélection de manière que l'entrée portant le niveau de salve couleur le plus élevé soit sélectionnée.

2. Récepteur selon la revendication 1, dans lequel lesdits moyens de comparaison sont couplés à une sortie desdits moyens de sélection.

3. Récepteur selon la revendication 1, dans lequel lesdits moyens de comparaison comprennent un circuit de commande de gain de chrominance automatique ayant une sortie de commande de gain délivrant des signaux indicatifs desdits niveaux de salve couleur à ladite première et à ladite deuxième entrées, respectivement.

4. Récepteur selon la revendication 1, dans lequel lesdits moyens de comparaison comprennent une mémoire recevant des signaux indicatifs desdits niveaux de salve couleur à ladite première et à ladite deuxième entrées, et un comparateur couplé à une entrée et à une sortie de ladite mémoire pour comparer lesdits signaux indicatifs correspondant auxdits niveaux des salves couleur présents à ladite première et à ladite deuxième entrées, respectivement, une sortie dudit comparateur étant couplée pour commander lesdits moyens de sélection.

5. Récepteur selon la revendication 1, comprenant en outre des moyens d'addition couplés à ladite première et à ladite deuxième entrées et des moyens couplés auxdits moyens d'addition pour identifier un standard de transmission de télévision sur la base de la somme des signaux à ladite première et à ladite deuxième entrées.

6. Récepteur selon la revendication 1, comprenant en outre des moyens d'identification de standard de transmission de télévision pour délivrer un signal indiquant l'absence de signaux de chrominance identifiables afin d'empêcher la sélection d'une entrée qui n'achemine pas des signaux de couleurs identifiables.
